**Europäisches Patentamt**

**European Patent Office**

**Office européen des brevets**

(19)

(11) **EP 1 533 629 A2**

(12) **EUROPÄISCHE PATENTANMELDUNG**

(43) Veröffentlichungstag:
  **25.05.2005 Patentblatt 2005/21**

(51) Int Cl.7: **G01S 17/46**

(21) Anmeldenummer: **04103936.3**

(22) Anmeldetag: **17.08.2004**

| | |
|---|---|
| (84) Benannte Vertragsstaaten:<br>**AT BE BG CH CY CZ DE DK EE ES FI FR GB GR HU IE IT LI LU MC NL PL PT RO SE SI SK TR**<br>Benannte Erstreckungsstaaten:<br>**AL HR LT LV MK** | (71) Anmelder: **SIEMENS AKTIENGESELLSCHAFT**<br>**80333 München (DE)** |
| (30) Priorität: **21.11.2003 DE 10354555** | (72) Erfinder: **Simon, Markus**<br>**91054, Buckenhof (DE)** |

(54) **Entfernungsmessung mit einem mobilen Endgerät**

(57)    Die Erfindung betrifft ein Verfahren zur Entfernungsmessung unter Verwendung eines mobilen Endgerätes, das eine Projektionseinrichtung (LP) und eine Kamera (K) aufweist. Erfindungsgemäß weist die Projektionseinrichtung (LP) einen vorgebbaren Winkel ($\alpha$) zur Kamera (K) auf, wird über die Kamera (K) der von einem Objekt (OB) reflektierte Strahl der Projektionseinrichtung (LP) an einer Pixelposition (DP) erfasst, und wird die Entfernung zu dem Objekt (OB) aus der Geometrie zwischen dem Strahlengang (L) der Projektionseinrichtung (LP) und der Pixelposition (DP) ermittelt.

FIG 2

**Beschreibung**

Die Erfindung betrifft ein Verfahren gemäß dem Oberbegriff des Patentanspruchs 1 sowie ein mobiles Endgerät gemäß dem Oberbegriff des Patentanspruchs 3.

Die manuelle Vermessung des Abstands zwischen Objekten ist für sehr unkomfortabel. Häufig ist die Messstrecke in direkter Verbindungslinie versperrt, so dass das Anlegen eines Zollstocks nicht möglich ist. In diesen Fällen bietet eine elektronische Vermessung weit mehr Komfort.

Bekannte Verfahren zur elektronischen Abstandsmessung basieren auf Laufzeitmessungen zwischen ausgestrahlter und reflektierter elektromagnetischen Strahlung, beispielsweise Radar, oder auf der Auswertung von Disparitäten der Objekte in stereoskopisch aufgezeichneten Kamerabildern. Beide Verfahren sind in der technischen Realisierung sehr aufwendig, so dass eine Integration in mobile Endgeräte häufig aus Platz- / und Kostengründen nicht sinnvoll ist.

Unter einem solchen mobilen Endgerät sind beispielsweise Mobiltelefone und PDAs (Personal Digital Assistant) zu verstehen.

Der Erfindung liegt die Aufgabe zu Grunde, eine insbesondere kostengünstige Entfernungsmessung für ein mobiles Endgerät anzugeben.

Diese Aufgabe wird erfindungsgemäß für ein Verfahren durch die im Patentanspruch 1 und für ein Endgerät durch die im Patentanspruch angegebenen Merkmale gelöst.

Durch das erfindungsgemäße Verfahren beziehungsweise das erfindungsgemäße Endgerät wird die Bestimmung der Entfernung zwischen einer Kamera und einem Objekt unter Verwendung eines einfachen Laserpointers ermöglicht.

Es ermöglicht eine präzise und einfache Bestimmung der Entfernung zwischen Kamera und Objekte durch die Verwendung eines vergleichsweise kostengünstigen Laserpointers.

Der Benutzer erhält ein direktes optisches Feedback über das zu vermessende Objekt durch den Beleuchtungspunkt des Lasers.

Die Entfernungsbestimmung basiert auf der Kenntnis der Geometrie zwischen dem Strahlengang des Lasers und jedem Bildpunkt der Kamera.

Eine Realisierung ist vorzugsweise gut geeignet für den Einsatz in mobilen Endgeräten mit eingebauter Kamera und einer Prozessoreinheit.

Im Folgenden wird die Erfindung an Hand eines in der Zeichnung dargestellten Ausführungsbeispieles beschrieben. Dabei zeigen:

Figur 1 eine Prinzipdarstellung der Erfindung zur Entfernungsbestimmung, und
Figur 2 Details zur Berechnung der Entfernung.

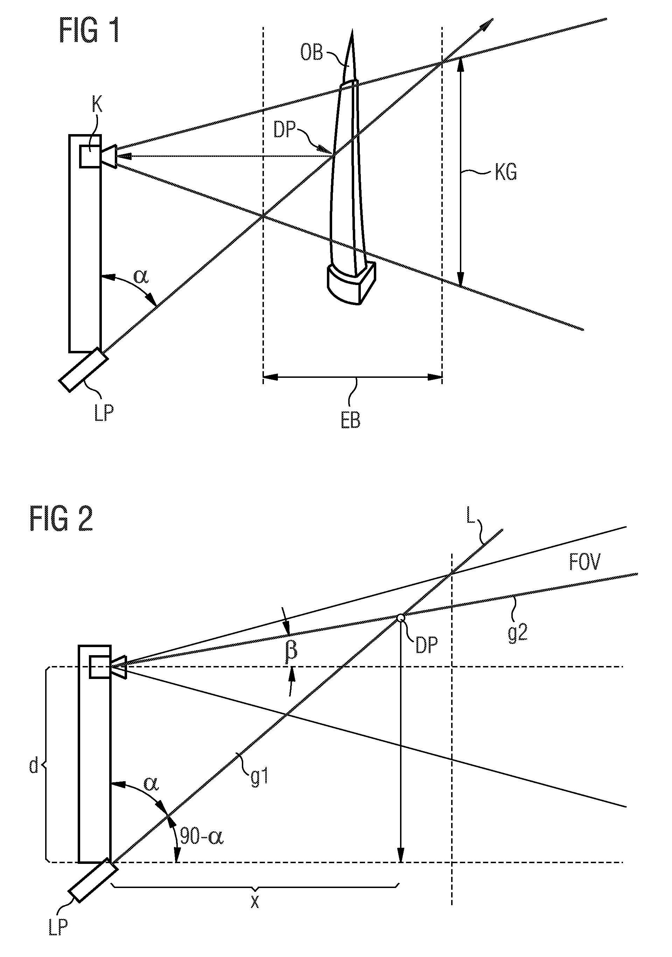

In Figur 1 ist eine Kamera K dargestellt, die beispielsweise in ein nicht näher bezeichnetes Video-Handy integriert ist. Ein Laserpointer LP ist in einem geringen Abstand (d in Figur 2) zur Kamera K befestigt und leuchtet unter einem vorgebbaren Winkel α in ein Gesichtsfeld KG der Kamera K. Der Abstand ist beispielsweise durch die Höhe des Video-Handys gegeben. Der Laserpointer LP kann auch durch eine Projektionseinrichtung realisiert sein, die für ein sogenanntes Projektionsdisplay verwendet wird.

Aus der bekannten Geometrie zwischen dem Strahlengang des Laserpointers LP (L in Figur 2) und jedem Bildpunkt der Kamera K kann der Abstand zu einem Gegenstand oder Objekt OB durch eine Triangulation ermittelt werden. Zur Entfernungsbestimmung muß der Benutzer den Laserpointer LP beziehungsweise den Laserstrahl auf das entsprechende Objekt OB positionieren. Durch einen Bildverarbeitungsalgorithmus wird die Pixelposition des Laserpunktes DP im Kamerabild KG ermittelt. Aus der Position und dem bekannten Winkel des Laserpointers LP zur Kamera K wird dann die Entfernung berechnet.

Durch das Gesichtsfeld der Kamera K ist ein Entfernungsbereich EB vorgegeben, in dem die Entfernungsmessung vorgenommen werden kann. Durch ein Verstellen des Winkels α zwischen der optischen Achse des Laserpointers LP und der Kamera K kann der zur Verfügung stehende Entfernungsbereich EB verschoben werden.

Das Verfahren eignet sich insbesondere für den Einsatz in mobilen Endgeräten, die mit einer Kamera K und einer nicht näher dargestellten Prozessoreinheit ausgestattet sind. Zusätzlich zu den ohnehin eingebauten Komponenten muß lediglich ein handelsüblicher Laserpointer LP auf das Endgerät aufgesteckt werden, der sich in verschiedenen Winkelpositionen zur Kamera K positionieren lässt.

Der Laserstrahl (L) wird von dem zu vermessenden Objekt OB reflektiert, von der Kamera K erfasst und mit Methoden der digitalen Bildverarbeitung detektiert. Die Entfernung zwischen mobilem Endgerät und Objekt OB errechnet sich aus der Pixelposition beziehungsweise der Position der Bildzeile des reflektierten Strahls in dem Kamerabild und dem Winkel, unter dem der Laserstrahl abstrahlt.

In Folgenden wird unter Bezug auf die Figur 2 die Berechnung der Entfernung näher erläutert. Dazu wird der

Zusammenhang zwischen Abstrahlwinkel $\alpha$ (Winkel zwischen Laserpointer LP und Kamera K), Zeilenposition in der Kamera K (Field Of View (FOV) der Zeile) und Objektentfernung x hergeleitet.

Die Entfernung zu dem Objekt OB ergibt sich aus dem Schnittpunkt der beiden Geraden g1 (Gerade, die durch den Laserstrahl L aufgespannt wird) und g2 (Gerade, die durch die Sichtlinie einer Bildzeile aufgespannt wird). Dieser Punkt entspricht der detektierten Pixelposition DP, das heisst dem sichtbaren Lichtfleck auf dem zu vermessenden Objekt OB.

Der Laserpointer LP strahlt unter dem Winkel $\alpha$ in den Raum. Durch den Winkel $\alpha$ (Winkel zwischen FOV und der optischen Achse der Kamera K beziehungsweise der zugehörigen Optik) ist die Sichtlinie festgelegt, die einer Bildzeile zugeordnet ist. Der Koordinatenursprung ist an der Position des Laserpointers LP. Die Variable d bezeichnet den Abstand zwischen Kamera K und Laserpointer LP in Einheiten von Meter. Mit x ist die Objektentfernung bezeichnet.

Damit ergeben sich folgende Gleichungen für die Geraden g1 und g2:

$$\text{g1 (Laser):} \quad p1 = \lambda 1 \cdot \begin{pmatrix} \cos(90^0 - \alpha) \\ \sin(90^0 - \alpha) \end{pmatrix}$$

$$\text{g2 (Bildzeile):} \quad p2 = \begin{pmatrix} 0 \\ d \end{pmatrix} + \lambda 2 \cdot \begin{pmatrix} \cos(\beta) \\ \sin(\beta) \end{pmatrix}$$

Für den Schnittpunkt der Geraden g1 und g2 gilt die Bedingung p1=p2. Für die Koordinaten x und y muss daher das folgende Gleichungssystem erfüllt sein:

G11 (x Koordinate des Schnittpunktes) : $\lambda 1 \cdot \cos(90° - \alpha) = \lambda 2 \cdot \cos(\beta)$

G12 (y Koordinate des Schnittpunktes) : $\lambda 1 \cdot \sin(90° - \alpha) = d + \lambda 2 \cdot \sin(\beta)$

Für die Entfernung x zu dem Objekt OB gilt folgende Gleichung:

G13 (Entfernungsgleichung) : $x = \lambda 2 \cdot \cos(\beta)$

Die Unbekannte $\lambda 2$ berechnet sich aus dem Gleichungssystems zu:

G14 (Parameter Lambda2) :

$$\lambda 2 = \frac{d}{\tan(90^0 - \alpha)} \cdot \frac{1}{\left( \cos(\beta) - \frac{\sin(\beta)}{\tan(90^0 - \alpha)} \right)}$$

Durch Einsetzen von $\lambda 2$ in Gleichung G13 ergibt sich die gesuchte Entfernung x zu dem Objekt OB.

Bei vorgegebener Zeilennummer (Winkel $\beta$), Abstrahlwinkel $\alpha$ und bekanntem Abstand zwischen Kamera K und Laserpointer LP (gleich d), ergibt sich die Entfernung x des Objektes OB aus der folgenden Gleichung:

$$x = \frac{d}{\tan(90^0 - \alpha)} \cdot \frac{1}{\left( \cos(\beta) - \frac{\sin(\beta)}{\tan(90^0 - \alpha)} \right)} \cdot \cos(\beta)$$

**Patentansprüche**

1. Verfahren zur Entfernungsmessung unter Verwendung eines mobilen Endgerätes, das eine Projektionseinrichtung (LP) und eine Kamera (K) aufweist,
   **dadurch gekennzeichnet dass**

   die Projektionseinrichtung (LP) einen vorgebbaren Winkel ($\alpha$) zur Kamera (K) aufweist,
   über die Kamera (K) der von einem Objekt (OB) reflektierte Strahl der Projektionseinrichtung (LP) an einer Pixelposition (DP) erfasst wird, und
   die Entfernung zu dem Objekt (OB) aus der Geometrie zwischen dem Strahlengang (L) der Projektionseinrichtung (LP) und der Pixelposition (DP) ermittelt wird.

2. Verfahren nach Anspruch 1,
   **dadurch gekennzeichnet dass**

   der Winkel ($\alpha$) zwischen Projektionseinrichtung (LP) und Kamera (K) einstellbar ausgebildet ist.

3. Mobiles Endgerät mit einer Projektionseinrichtung (LP) und einer Kamera (K),
   **gekennzeichnet durch**

   einen vorgebbaren Winkel ($\alpha$) zwischen Projektionseinrichtung (LP) und Kamera (K), und
   Mittel zur Entfernungsberechnung auf Grundlage des über die Kamera (K) an einer Pixelposition (DP) erfassten, von einem Objekt (OB) reflektierten Strahles, und dem Strahlengang (L) der Projektionseinrichtung (LP).

4. Mobiles Endgerät
   **gekennzeichnet durch**

   einen einstellbar ausgebildeten Winkel ($\alpha$) zwischen Projektionseinrichtung (LP) und Kamera (K).

FIG 1

FIG 2